# EUROPEAN PATENT APPLICATION

(11) **EP 4 166 863 A1**
(43) Date of publication of application: **19.04.2023**
(21) Application number: 21881621.3
(22) Date of filing: 27.07.2021
(51) Int. Cl.: F24F 11/64, F24F 11/86, F24F 11/61, F24F 140/50

(54) **COMPRESSOR CONTROL METHOD AND CONTROL APPARATUS AND MODULAR AIR CONDITIONING UNIT**

(30) Priority: 22.10.2020 CN 202011140386
(71) Applicant: Gree Electric Appliances, Inc. of Zhuhai, Zhuhai, Guangdong 519070 (CN)
(72) Inventor: LIU, Hua, Zhuhai, Guangdong 519070 (CN); ZHANG, Longai, Zhuhai, Guangdong 519070 (CN); WEN, Zuheng, Zhuhai, Guangdong 519070 (CN); WANG, Chuanhua, Zhuhai, Guangdong 519070 (CN); LI, Jun, Zhuhai, Guangdong 519070 (CN); LUO, Zhaoming, Zhuhai, Guangdong 519070 (CN)
(74) Representative: Nevett, Duncan
(86) International application number: PCT/CN2021/108645
(87) International publication number: WO 2022/083201

(57) **Abstract**

The present disclosure provides a compressor control method and control apparatus and a modular air conditioning unit. The modular air conditioning unit comprises at least one variable frequency air conditioning unit, the variable frequency air conditioning unit is provided with at least one compressor, and the compressor has at least one frequency efficient band sequentially distributed from low to high. The compressor control method comprises the following steps: detecting the load demand of the modular air conditioning unit; determining whether the output capability of the modular air conditioning unit meets the load demand; if the output capability does not meet the load demand, determining whether to turn on all the compressors, and if so, gradually increasing the operating frequencies of the compressors from the turn-on frequency to each frequency efficient band according to a set frequency increase rule, otherwise, turning on the compressors one by one according to a set order.

## Description

### CROSS-REFERENCE TO RELATED APPLICATIONS

The present disclosure is based on and claims priority of Chinese application for invention No. 202011140386.8, filed on Oct. 22, 2020, the disclosure of which is hereby incorporated into this disclosure by reference in its entirety.

### TECHNICAL FIELD

The present disclosure relates to the field of air conditioning, and in particular to a compressor control method and control device, and a modular air conditioning unit.

### BACKGROUND

In the cooperative operation of multiple inverter air conditioning units, the conventional compressor control mode is that each unit adjusts the start/stop and frequency increasing/decreasing of its compressor individually according to the load.

### SUMMARY

According to one aspect of the embodiments of the present disclosure, there is provided a compressor control method of a modular air conditioning unit, comprising: detecting a load demand of the modular air conditioning unit, the modular air conditioning unit comprising at least one inverter air conditioning unit equipped with at least one compressor, the compressor having at least one high-efficient frequency range distributed from low frequency to high frequency in order; determining whether the output capacity of the modular air conditioning unit meets the load demand; in case where the output capacity does not meet the load demand, determining whether all compressors are started; in case where all compressors are started, gradually increasing operating frequencies of the compressors from a starting frequency to a corresponding high-efficient frequency range according to a preset rule for frequency increasing; and in case where not all compressors are started, starting the compressors one by one according to a preset sequence.

In some embodiments, the preset rule for frequency increasing comprises at least one of: in case where all compressors operate at frequencies between the starting frequency and a lowest high-efficient frequency range, and operating frequencies of all compressors are not completely consistent, gradually increasing the operating frequencies of the compressors to a lower limit of the lowest high-efficient frequency range according to a preset sequence; in case where all compressors operate in the same high-efficient frequency range and at the same operating frequency, gradually increasing the operating frequencies of all compressors to an upper limit of the high-efficient frequency range simultaneously; in case where all compressors operate in the same high-efficient frequency range and at operating frequencies that are not completely consistent, gradually increasing the operating frequencies of the compressors to an upper limit of the high-efficient frequency range according to a preset sequence; in case where all compressors operate at the same operating frequency and between two adjacent high-efficient frequency ranges, gradually increasing the operating frequencies of all compressors to a lower limit of a higher one of the two high-efficient frequency ranges simultaneously; or in case where all compressors operate at frequencies between any high-efficient frequency range and a lower limit of its adjacent high-efficient frequency range, and the operating frequencies of the compressors are not completely consistent, gradually increasing the operating frequencies of the compressors to the lower limit of the adjacent high-efficient frequency range according to a preset sequence.

In some embodiments, the preset rule for frequency increasing further comprises: in case where all compressors operate at an upper limit of the highest high-efficient frequency range, gradually increasing the operating frequencies of all compressors to a highest frequency simultaneously.

In some embodiments, the compressor control method further comprises: in case where the output capacity exceeds the load demand, determining whether the compressors are not all started or whether all compressors are operating at the starting frequency; in case where the compressors are not all started or are operating at the starting frequency, turning off the compressors one by one according to a preset sequence; in case where the compressors are all started and at least one compressor is not operating at the starting frequency, gradually decreasing the operating frequencies of the compressors to the starting frequency according to a preset rule for frequency decreasing.

In some embodiments, the preset rule for frequency decreasing comprises at least one of: in case where all compressors operate at frequencies between the starting frequency and a lower limit of a lowest high-efficient frequency range, gradually decreasing the operating frequencies of the compressors to the starting frequency according to a preset sequence; or in case where all compressors operate at frequencies higher than the lower limit of the lowest high-efficient frequency range, gradually decreasing the operating frequencies of all compressors simultaneously.

In some embodiments, the compressor control method further comprises: maintaining the current state of the modular air conditioning unit in case where the output capacity just meets the load demand.

In some embodiments, all compressors have the same starting frequency and the same high-efficient frequency range.

In some embodiments, the operating frequencies of all compressors are gradually increased or decreased according to a specified step.

In some embodiments, in case where the operating state or load demand of a compressor changes, it will be re-determined whether the output capacity of the modular air conditioning unit meets the load demand.

According to second aspect of the embodiments of the present disclosure, there is provided a compressor control device of a modular air conditioning unit, comprising: a memory for storing instructions; a processor coupled to the memory, the processor configured to, based on the instructions stored in the memory, carry out the method according to any one of the above embodiments.

According to a third aspect of the embodiments of the present disclosure, there is provided a modular air conditioning unit, comprising the compressor control device of any one of the above embodiments.

According to a fourth aspect of the embodiments of the present disclosure, a non-transitory computer-readable storage medium is provided on which computer instructions are stored, which when executed by a processor implement the method according to any one of the above embodiments.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a flow diagram of a compressor control method according to an embodiment of the present disclosure;
FIG. 2 is a structural diagram of a compressor control device according to an embodiment of the present disclosure;
FIG. 3 is a structural diagram of a modular air conditioning unit according to an embodiment of the present disclosure.

It should be understood that the dimensions of the various parts shown in the drawings are not drawn to the actual scale. In addition, the same or similar reference signs are used to denote the same or similar components.

### DETAILED DESCRIPTION

Various exemplary embodiments of the present disclosure will now be described in detail with reference to the accompanying drawings. The following description of the exemplary embodiments is in fact merely illustrative and is in no way intended as a limitation to the present disclosure, its application or use. The present disclosure may be implemented in many different forms, not limited to the embodiments described herein. These embodiments are provided so that this disclosure will be thorough and complete, and will fully convey the scope of the disclosure to those skilled in the art. Notice that, Unless specifically stated otherwise, relative arrangement of components and steps, material composition, numerical expressions, and numerical values set forth in these embodiments are to be construed as merely illustrative, and not as a limitation.

A word such as " includes " or "comprises" used in the present disclosure means that the element before the word covers the elements listed after the word, without excluding the possibility of also covering other elements.

Unless otherwise defined, all terms (comprising technical and scientific terms) used herein have the same meaning as commonly understood by one of ordinary skill in the art to which exemplary embodiments in accordance with principles of inventive concepts belong. It will also be understood that terms defined in such general-purpose dictionaries should be interpreted as having a meaning that is consistent with their meaning in the context of the relevant art, and not to be interpreted in an idealized or overly formal sense, unless explicitly defined herein.

Techniques, methods, and apparatus known to those of ordinary skill in the relevant art may not be discussed in detail, but where appropriate, these techniques, methods, and apparatuses should be considered as part of the specification.

The inventors have found that the conventional compressor control mode is to regulate the start/stop and frequency increasing/decreasing of a compressor for a single unit according to the load, without the concept of overall regulation. Often, the compressor of a unit operates at its highest frequency while other units may just start or operate at low-efficient frequencies, resulting in low energy efficiency of the overall system, serious energy consumption, and high operating costs. Furthermore, the higher the operating frequency, the greater the impact on the noise, and thereby, the user experience may be greatly affected.

In view of this, the present disclosure provides a compressor control scheme, which can improve the overall operation efficiency of a modular air conditioning unit.

The compressor control method provided in the present disclosure is applicable to a modular air conditioning unit comprising at least one inverter air conditioning unit equipped with at least one compressor, each compressor having at least one high-efficient frequency range distributed from low frequency to high frequency in order. In practical applications, a modular air conditioning unit usually comprises more than two inverter air conditioning units. In order to facilitate regulation, compressors with the same characteristics are combined into the same modular air conditioning unit, that is, all compressors in the modular air conditioning unit have the same starting frequency and the same high-efficient frequency range.

The compressor control method comprises the following steps.

Detecting a load demand of the modular air conditioning unit, which usually refers to an indoor load demand at the end of the modular air conditioning unit; determining whether the output capacity of the modular air conditioning unit meets the load demand, wherein the output capacity usually refers to refrigerating capacity or heating capacity; in case where the output capacity does not meet the load demand, determining whether all compressors are started; in case where all compressors are started, gradually increasing operating frequencies of the compressors from a starting frequency to a corresponding high-efficient frequency ranges according to a preset rule for frequency increasing; in case where not all compressors are started, starting the compressors one by one according to a preset sequence to increase the number of compressors in operation.

In case where the output capacity exceeds the load demand, determining whether the compressors are not all started or whether all compressors are operating at a starting frequency; if so, turning off the compressors one by one according to a preset sequence to reduce the number of compressors in operation; otherwise, gradually decreasing the operating frequencies of the compressors to the starting frequency according to a preset rule for frequency decreasing.

In case where the output capacity just meets the load demand, maintaining the current state of the modular air conditioning unit. "Just meet" here means that the output capacity is within an allowable range of the load demand.

In some embodiments, the preset rule for frequency increasing comprises.

In case where all compressors operate at frequencies between the starting frequency and a lowest high-efficient frequency range, and their operating frequencies are not completely consistent, gradually increasing the operating frequencies of the compressors to a lower limit value of the lowest high-efficient frequency range according to a preset sequence. Specifically, after a first compressor is gradually increased from the starting frequency to the lower limit of the lowest high-efficient frequency range, in case where the output capacity still does not meet the load demand, the frequency of a second compressor is gradually increased from the starting frequency to the lower limit of the lowest high-efficient frequency range; in case where the output capacity still does not meet the load demand, the operating frequency of a third compressor is increased, and so on, until all compressors' operating frequencies reach the lower limit of the lowest high-efficient frequency range.

In case where all compressors operate in the same high-efficient frequency range and at the same operating frequency, gradually increasing the operating frequencies of all compressors to an upper limit of the high-efficient frequency range simultaneously. Specifically, after each increase of the operating frequencies of all compressors, in case where the output capacity still does not meet the load demand, the operating frequencies of all compressors will be continuously increased, until the operating frequencies of all compressors reaches the upper limit of the same high-efficient frequency range.

In case where all compressors operate in the same high-efficient frequency range and at operating frequencies that are not completely consistent, gradually increasing the operating frequencies of the compressors to an upper limit of the high-efficient frequency range according to a preset sequence. Specifically, after the operating frequency of a first compressor is gradually increased to the upper limit of the high-efficient frequency range, in case where the output capacity still does not meet the load demand, the operating frequency of a second compressor is gradually increased to the upper limit of the high-efficient frequency range; in case where the output capacity still does not meet the load demand, the operating frequency of a third compressor is increased, and so on, until the operating frequencies of all compressors reach the upper limit of the high-efficient frequency range according this rule.

In case where all compressors operate at the same operating frequency and between two adjacent high-efficient frequency ranges, gradually increasing the operating frequencies of all compressors to a lower limit of a higher one of the two high-efficient frequency ranges simultaneously. Specifically, after each increase of the operating frequencies of all compressors, in case where the output capacity still does not meet the load demand, the operating frequencies of all compressors will be continuously increased, until the operating frequencies of all compressors reach the lower limit of a higher one of the two high-efficient frequency ranges.

In case where all compressors operate at frequencies between any high-efficient frequency range and a lower limit of its adjacent high-efficient frequency range, and the operating frequencies of the compressors are not completely consistent, gradually increasing the operating frequencies of the compressors to the lower limit of the adjacent high-efficient frequency range according to a preset sequence. Specifically, after the operating frequency of a first compressor is gradually increased to the lower limit of the adjacent high-efficient frequency range, in case where the output capacity still does not meet the load demand, the operating frequency of a second compressor is gradually increased to the lower limit of the adjacent high-efficient frequency range; in case where the output capacity still does not meet the load demand, the operating frequency of a third compressor is increased, and so on until the operating frequencies of all compressors reach the lower limit of the adjacent high-efficient frequency range according this rule.

In case where all compressors operate at an upper limit of the highest high-efficient frequency range, gradually increasing the operating frequencies of all compressors to the highest frequency simultaneously. Specifically, in case where the output capacity still does not meet the load demand after each increase of the operating frequencies of all compressors, the operating frequencies of all compressors will be increased continuously until the operating frequencies of all compressors reach the highest frequency.

In some embodiments, the preset rule for frequency decreasing comprises.

In case where all compressors operate at frequencies between a starting frequency and a lower limit of the lowest high-efficient frequency range, gradually decreasing the operating frequencies of the compressors to the starting frequency according to a preset sequence. Specifically, the operating frequency of a first compressor will be gradually reduced to the starting frequency; in case where the output capacity still exceeds the load demand, the operating frequency of a second compressor will be gradually reduced to the starting frequency; in case where the output capacity still exceeds the load demand, the operating frequency of a third compressor will be reduce, and so on until the operating frequencies of all compressors are reduced to the starting frequency according to this rule.

In case where all compressors operate at frequencies higher than the lower limit of the lowest high-efficient frequency range, gradually decreasing the operating frequencies of all compressors simultaneously. Specifically, after each reduction of the operating frequencies of all compressors, in case where the output capacity still exceeds the load demand, the operating frequencies of all compressors will be continuously reduced until the operating frequencies of all compressors are reduced to the starting frequency.

It should be noted that the lower limit of a high-efficient frequency range is set because the lower limit corresponds to lower noise, which ensure that the compressor has higher efficiency and lower noise. Furthermore, all compressors in the modular air conditioning unit have respective numbers, such as compressor 1, compressor 2... compressor n. The setting sequence is from compressor 1 to compressor n one by one in the sequence of the numbers. In the process of operating frequency regulation, the operating frequency is gradually increased or decreased according to a specified step, which may be 1Hz or other values. In some embodiments, when the operating state or load demand of a compressor changes, it will be re-determined whether the output capacity of the modular air conditioning unit meets the load demand, to ensure that the output capacity just meets the load demand, and to improve the operating efficiency of the unit.

To facilitate understanding, an example will be described, in which the compressor has two high-efficient frequency ranges, namely a LF (Low Frequency) high-efficient range and a HF (High Frequency) high-efficient range above the LF high-efficient range. The LF high-efficient range has a lower limit a and an upper limit b; the HF high-efficient range has a lower limit c and an upper limit d, wherein a, b, c, and d are all in Hz and increase in turn. In a practical application, multiple high-efficient frequency ranges sections such as e~f, g~h, etc. are added according to the characteristics of the compressor. The high-efficient frequency ranges of the compressor are further subdivided, so that all compressors in the modular air conditioning unit have multiple high-efficient frequency ranges, and the compressors are more accurately controlled to maintain efficient and low noise operation.

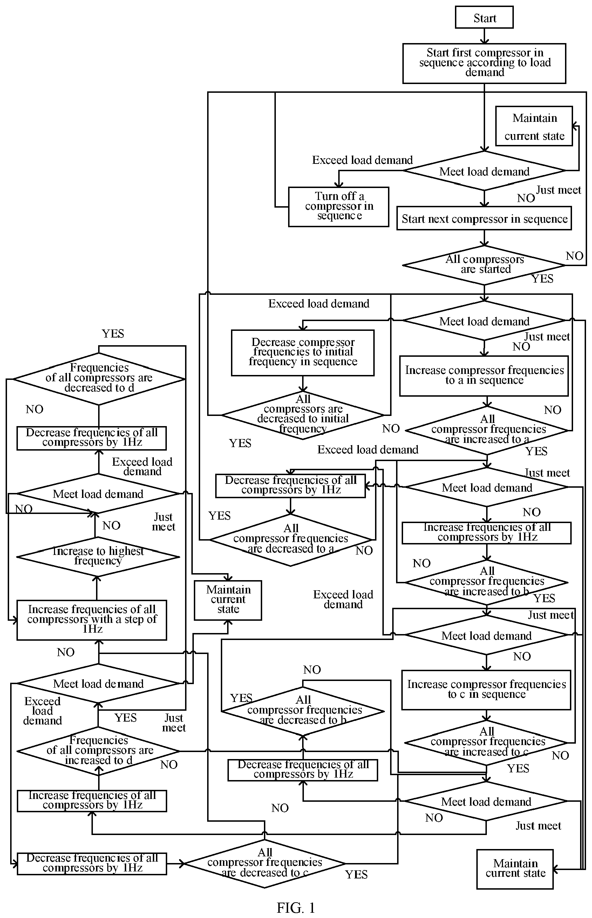

In some embodiments, as shown in FIG. 1, the compressor control method is as follows.

Step 1.0: detect whether there is load demand at the end of the modular air conditioning unit, and if so, start a first compressor according to a preset sequence.

Step 2.0: determine whether the output capacity of the modular air conditioning unit meets the load demand; if not, go to Step 3.0; if the output capacity of the modular air conditioning unit exceeds the load demand, go to Step 2.1; and if the output capacity of the modular air conditioning unit just meets the load demand, maintain the current state.

Step 2.1: turn off the compressors one by one according to the preset sequence and return to Step 2.0.

Step 3.0: start the next compressor according to the preset sequence and go to Step 4.0.

Step 4.0: determine whether all compressors are started; If not, return to step 2.0; if so, go to step 5.0.

Step 5.0: determine whether the output capacity of the modular air conditioning unit meets the load demand; if not, go to Step 6.0; if the output capacity of the modular air conditioning unit exceeds the load demand, go to Step 5.1; and if the output capacity of the modular air conditioning unit just meets the load demand, maintain the current state.

Step 5.1: reduce the operating frequencies of the compressors to the starting frequency one by one according to the preset sequence; after reducing the operating frequency of a compressor each time, determine whether the operating frequencies of all compressors are reduced to the starting frequency; if so, return to step 2.0, if not, return to step 5.0.

Step 6.0: increase the operating frequencies of the compressors from the starting frequency to a one by one according to the preset sequence; after increasing the operating frequency of one compressor each time, determine whether the operating frequencies of all compressors reach a, if so, go to step 7.0, if not, return to step 5.0.

Step 7.0: determine whether the output capacity of the modular air conditioning unit meets the load demand; if not, go to Step 8.0; if the output capacity of the modular air conditioning unit exceeds the load demand, go to Step 7.1; if the output capacity of the modular air conditioning unit just meets the load demand, maintain the current state.

Step 7.1: reduce the operating frequencies of all compressors simultaneously; after reducing the operating frequencies of all compressors each time, determine whether the operating frequencies of all compressors are reduced to a; if so, return to step 5.0, if not, return to step 7.0.

Step 8.0: increase the operating frequencies of all compressors simultaneously; after increasing the operating frequencies of all compressors each time, determine whether the operating frequencies of all compressors are reduced to b; if so, return to step 9.0, if not, return to step 7.0.

Step 9.0: determine whether the output capacity of the modular air conditioning unit meets the load demand; if not, go to Step 10.0; if the output capacity of the modular air conditioning unit exceeds the load demand, go to Step 9.1; if the output capacity of the modular air conditioning unit just meets the load demand, maintain the current state.

Step 9.1: reduce the operating frequencies of all compressors simultaneously; after reducing the operating frequencies of all compressors each time, determine whether the operating frequencies of all compressors are reduced to b; if so, return to step 7.0, if not, return to step 9.0.

Step 10.0: increase the operating frequencies of the compressors from b to c one by one according to the preset sequence; after increasing the operating frequency of one compressor each time, determine whether the operating frequencies of all compressors reach c, if so, go to step 11.0, if not, return to step 9.0.

Step 11.0: determine whether the output capacity of the modular air conditioning unit meets the load demand; if not, go to Step 12.0; if the output capacity of the modular air conditioning unit exceeds the load demand, go to Step 11.1; if the output capacity of the modular air conditioning unit just meets the load demand, maintain the current state.

Step 11.1: reduce the operating frequencies of all compressors simultaneously; after reducing the operating frequencies of all compressors each time, determine whether the operating frequencies of all compressors are reduced to b; if so, return to step 9.0, if not, return to step 7.0.

Step 12.0: increase the operating frequencies of all compressors simultaneously; after increasing the operating frequencies of all compressors each time, determine whether the operating frequencies of all compressors are increased to d; if so, return to step 13.0, if not, return to step 11.0.

Step 13.0: determine whether the output capacity of the modular air conditioning unit meets the load demand; if not, go to Step 14.0; if the output capacity of the modular air conditioning unit exceeds the load demand, go to Step 13.1; if the output capacity of the modular air conditioning unit just meets the load demand, maintain the current state.

Step 13.1: reduce the operating frequencies of all compressors simultaneously; after reducing the operating frequencies of all compressors each time, determine whether the operating frequencies of all compressors are reduced to c; if so, return to step 11.0, if not, return to step 13.0.

Step 14.0: increase the operating frequencies of all compressors simultaneously; after increasing the operating frequencies of all compressors each time, determine whether the operating frequencies of all compressors are increased to the highest frequency; if so, go to step 15.0, if not, return to step 13.0.

Step 15.0: determine whether the output capacity of the modular air conditioning unit meets the load demand; if the output capacity of the modular air conditioning unit exceeds the load demand, go to Step 15.1; if not or if the output capacity of the modular air conditioning unit just meets the load demand, maintain the current state.

Step 15.1: reduce the operating frequencies of all compressors simultaneously; after reducing the operating frequencies of all compressors each time, determine whether the operating frequencies of all compressors are reduced to d; if so, return to step 13.0, if not, return to step 15.0.

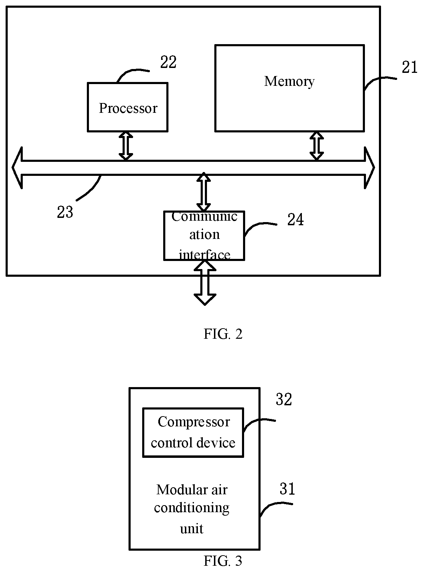

FIG. 2 is a structural diagram of a compressor control device according to an embodiment of the present disclosure. As shown in FIG. 2, the compressor control device comprises a memory 21 and a processor 22.

The memory 21 is configured to store instructions. The processor 22 is coupled to the memory 21, and is configured to, based on instructions stored in the memory, carry out a method involved in any one of the embodiments of FIG. 1.

As shown in FIG. 2, the compressor control device further comprises a communication interface 23 for performing information interaction with other devices. In addition, the compressor control device further comprises a bus 24. The processor 22, the communication interface 23, and the memory 21 perform communication with each other through the bus 24.

The memory 21 may comprise a high speed RAM memory, and may also comprise a non-volatile memory such as at least one disk storage device. The memory 21 can also be a memory array. The memory 21 may also be partitioned into blocks, which may be combined into virtual volumes according to a certain rule.

In addition, the processor 22 may be a central processing unit (CPU), or may be an Application Specific Integrated Circuit (ASIC) or one or more integrated circuits configured to implement the embodiments of the present disclosure.

The present disclosure further relates to a non-transitory computer-readable storage medium on which computer instructions are stored, which when executed by a processor, implement the method according to any one of the embodiments shown in FIG. 1.

FIG. 3 is a structural diagram of a modular air conditioning unit according to an embodiment of the present disclosure. As shown in FIG. 3, the modular air conditioning unit 31 comprises a compressor control device 32. The compressor control device 32 is a compressor control device according to any one of the embodiments shown in FIG. 2.

The above is merely preferred embodiments of this disclosure, and is not limitation to this disclosure. Within spirit and principles of this disclosure, any modification, replacement, improvement and etc shall be contained in the protection scope of this disclosure.

## Claims

1. A compressor control method of a modular air conditioning unit, comprising:
detecting a load demand of the modular air conditioning unit, the modular air conditioning unit comprising at least one inverter air conditioning unit equipped with at least one compressor, the compressor having at least one high-efficient frequency range distributed from low frequency to high frequency in order;
determining whether the output capacity of the modular air conditioning unit meets the load demand;
in case where the output capacity does not meet the load demand, determining whether all compressors are started;
in case where all compressors are started, gradually increasing operating frequencies of the compressors from a starting frequency to a corresponding high-efficient frequency range according to a preset rule for frequency increasing; and
in case where not all compressors are started, starting the compressors one by one according to a preset sequence.

2. The compressor control method according to claim 1, wherein the preset rule for frequency increasing comprises at least one of:
in case where all compressors operate at frequencies between the starting frequency and a lowest high-efficient frequency range, and operating frequencies of all compressors are not completely consistent, gradually increasing the operating frequencies of the compressors to a lower limit of the lowest high-efficient frequency range according to a preset sequence;
in case where all compressors operate in the same high-efficient frequency range and at the same operating frequency, gradually increasing the operating frequencies of all compressors to an upper limit of the high-efficient frequency range simultaneously;
in case where all compressors operate in the same high-efficient frequency range and at operating frequencies that are not completely consistent, gradually increasing the operating frequencies of the compressors to an upper limit of the high-efficient frequency range according to a preset sequence;
in case where all compressors operate at the same operating frequency and between two adjacent high-efficient frequency ranges, gradually increasing the operating frequencies of all compressors to a lower limit of a higher one of the two high-efficient frequency ranges simultaneously; or
in case where all compressors operate at frequencies between any high-efficient frequency range and a lower limit of its adjacent high-efficient frequency range, and the operating frequencies of the compressors are not completely consistent, gradually increasing the operating frequencies of the compressors to the lower limit of the adjacent high-efficient frequency range according to a preset sequence.

3. The compressor control method according to claim 1, wherein the preset rule for frequency increasing further comprises:
in case where all compressors operate at an upper limit of the highest high-efficient frequency range, gradually increasing the operating frequencies of all compressors to a highest frequency simultaneously.

4. The compressor control method according to claim 1, wherein the compressor control method further comprises:
in case where the output capacity exceeds the load demand, determining whether the compressors are not all started or whether all compressors are operating at the starting frequency;
in case where the compressors are not all started or are operating at the starting frequency, turning off the compressors one by one according to a preset sequence;
in case where the compressors are all started and at least one compressor is not operating at the starting frequency, gradually decreasing the operating frequencies of the compressors to the starting frequency according to a preset rule for frequency decreasing.

5. The compressor control method according to claim 4, wherein the preset rule for frequency decreasing comprises at least one of:
in case where all compressors operate at frequencies between the starting frequency and a lower limit of a lowest high-efficient frequency range, gradually decreasing the operating frequencies of the compressors to the starting frequency according to a preset sequence; or
in case where all compressors operate at frequencies higher than the lower limit of the lowest high-efficient frequency range, gradually decreasing the operating frequencies of all compressors simultaneously.

6. The compressor control method according to claim 1, wherein the compressor control method further comprises:
maintaining the current state of the modular air conditioning unit in case where the output capacity just meets the load demand.

7. The compressor control method according to any one of claims 1 to 6, wherein all compressors have the same starting frequency and high-efficient frequency ranges.

8. The compressor control method according to any one of claims 1 to 6, wherein the operating frequencies of all compressors are gradually increased or decreased according to a specified step.

9. The compressor control method according to any one of claims 1 to 6, wherein in case where the operating state or load demand of a compressor changes, it will be re-determined whether the output capacity of the modular air conditioning unit meets the load demand.

10. A compressor control device of a modular air conditioning unit, comprising:
a memory for storing instructions; and
a processor coupled to the memory, the processor configured to, based on the instructions stored in the memory, carry out the method according to any one of claims 1 to 9.

11. A modular air conditioning unit, comprising the compressor control device according to claim 10.

12. A non-transitory computer-readable storage medium stored thereon computer instructions that, when executed by a processor, implement the method according to any one of claims 1 to 9.
